# EUROPÄISCHE PATENTSCHRIFT

(11) **EP 1 462 398 B1**
(45) Veröffentlichungstag und Bekanntmachung des Hinweises auf die Patenterteilung: **17.05.2006**
(21) Anmeldenummer: 04007042.7
(22) Anmeldetag: 24.03.2004
(51) Int. Cl.: B65G 53/24

(54) **Vorrichtung zum Fördern von Holzpellets aus einem Vorratsbehälter in eine Heizanlage**
Apparatus for transporting wood pellets from a container to a heating installation
Dispositif pour transporter des granules compressés de bois vers un appareil de chauffage

(30) Priorität: 24.03.2003 DE 10313131
(43) Veröffentlichungstag der Anmeldung: 29.09.2004
(73) Patentinhaber: Steinecke, Ekkehard, 74343 Sachsenheim (DE)
(72) Erfinder: Steinecke, Ekkehard, 74343 Sachsenheim (DE)
(74) Vertreter: Lucht, Silvia

(56) Entgegenhaltungen:
- CA-A- 1 107 792
- DE-B- 1 506 878
- DE-U- 9 318 704
- US-A- 5 915 312

## Beschreibung

### Stand der Technik

Die Erfindung geht aus von einer Vorrichtung zum Fördern von Holzpellets nach dem Oberbegriff des Anspruchs 1.

Holzpellet-Heizungen werden zum Beheizen von Gebäuden und zur Warmwasserbereitung eingesetzt. In räumlicher Nähe zur Heizung wird ein Vorratsbehälter, beispielsweise ein Silo, angeordnet, aus welchem bei Betrieb der Heizung kontinuierlich Holzpellets in den Brenner der Heizung gefördert werden. Aus dem Stand der Technik sind hierzu Förderschnecken oder Förderspiralen bekannt. Dabei fördert eine umlaufende Schnecke oder Spirale in einem Rohr die Holzpellets vom Vorratsbehälter zur Heizung. Derartige Vorrichtungen haben den Nachteil, dass sie verstopfen können, insbesondere wenn in den Vorratsbehälter Teile gelangen, welche in Größe und Form von den Holzpellets abweichen. Das Beseitigen derartiger Teile aus der Förderschnecke oder Förderspirale ist stets mit großem Aufwand verbunden. Darüber hinaus können derartige Störungen zu einem Ausfall der Heizung führen. Ein weiterer Nachteil der Förderschnecken und Förderspiralen besteht darin, dass die Holzpellets aufgrund der Reibung an der Förderschnecke oder Förderspirale und an dem umgebenden Rohr einen Abrieb erfahren. Dieser führt zur Entstehung von Holzmehl, welches entweder in der Fördervorrichtung verbleibt oder sofern es in den Brenner der Heizung gelangt, zu Funkenflug und anderen unerwünschten Reaktionen führen kann. Der Anteil von Holzmehl an den Holzpellets kann je nach Fördervorrichtung hoch sein. Das Holzmehl kann nicht wie die Holzpellets in der Heizung verbrannt werden und steht damit für die Energieerzeugung nicht zur Verfügung. Je höher damit der Anteil des Holzmehls ist, um so größer ist der Energieverlust. Außerdem führt die Reibung der Holzpellets an der Förderschnecke oder Spirale zu einem Verschleiß der Fördereinrichtung.

Das Dokument US-A-5 915 312 offenbart eine Vorrichtung zum Fördern von Granulat aus einem Vorratsbehälter mit einem Topf, in welchen das Granulat aufgrund ihrer Gewichts Kraft aus dem Vorratsbehälter fällt und mit einer Förderleitung für das Granulat, welche mit dem Topf verbunden ist, wobei ein Gebläse zum Erzeugen eines Luftstroms in der Förderleitung vorgesehen ist.

### Die Erfindung und ihre Vorteile

Demgegenüber hat die erfindungsgemäße Vorrichtung zum Fördern von Holzpellets mit den Merkmalen des Anspruchs 1 den Vorteil, dass die Wahrscheinlichkeit des Verstopfens reduziert ist. Dies liegt daran, dass die Stärke des Luftstroms an die Holzpellets angepasst ist. Schwerere Gegenstände wie beispielsweise Schrauben, Nägel oder sonstige Teile aus Metall werden nicht angesaugt. Darüber hinaus entsteht zwischen den Holzpellets und dem Rohr, durch welches die Holzpellets angesaugt werden, keine oder nur vernachlässigbar wenig Reibung. Das Entstehen von Holzmehl sowie ein Verschleiß der Fördereinrichtung kann somit vernachlässigt oder gar ausgeschlossen werden.

Das in den Topf mündende Ende des Rohrs ist abgeschrägt. Diese abgeschrägte Seite ist geöffnet. Darüber hinaus ist das in den Topf mündende Ende des Rohrs in dem Topf drehbar und verschiebbar gelagert. Zum Drehen und Verschieben kann entweder ein Griff, ein Hebel oder ein Antrieb vorgesehen sein. Auf den Griff kann verzichtet werden, wenn der Topf in Bodennähe angeordnet ist. In diesem Fall würde der Griff eine Umdrehung des Rohrs behindern. Über den Antrieb kann das Rohr im Falle eines Verstopfens des Rohr automatisch gedreht oder verschoben werden.

Die Förderleitung kann beispielsweise ein Kunststoffschlauch sein. Kunststoffschläuche haben den Vorteil, dass sie leicht und flexibel sind. Sie können daher an die räumlichen Gegebenheiten angepasst werden. Außerdem ist ein Kunststoffschlauch so beweglich, dass trotz der Befestigung am Rohr ein Drehen und Verschieben des Rohrs möglich ist. Der Kunststoffschlauch ist mit seinem einen Ende mit dem Rohr verbunden. Hierzu eignet sich beispielsweise eine Rohrschelle. Das andere Ende des Kunststoffschlauchs reicht zumindest mittelbar bis an die Heizung heran. Direkt an der Heizung kann ein zweiter kleinerer Vorratsbehälter vorgesehen sein, in welchen die durch die Förderleitung transportierten Holzpellets abgelagert werden. Aus diesem zweiten Vorratsbehälter werden die Holzpellets über eine Förderschnecke oder Förderspirale in den Brenner der Heizung gefördert. Zwischen dem zweiten Vorratsbehälter und dem Brenner der Heizung sorgt eine Brandschutzklappe dafür, dass das Feuer nicht vom Brenner auf den Vorratsbehälter übergreifen kann.

In bevorzugter Weise ragt das Rohr seitlich in den Topf hinein. Je nach Einstellung des abgeschrägten offenen Endes des Rohres werden mehr oder weniger Holzpellets pro Zeiteinheit angesaugt. Sollte ein Teil die abgeschrägte Öffnung des Rohres verstopfen, so kann das Rohr gedreht oder verschoben werden, wodurch die Öffnung des Rohres von dem kritischen Teil entfernt wird. Um eine Verstopfung zu beseitigen, muss daher der Topf nicht vom Vorratsbehälter abgenommen werden.

Nach einer weiteren vorteilhaften Ausgestaltung der Erfindung ist als Führung für das drehbare und verschiebbare Ende des Rohrs ein das Rohr an der Außenseite umgebendes Führungsrohr vorgesehen. Dieses Führungsrohr mündet von außen in den Topf. Es kann entweder mit dem Topf abschließen oder in den Topf hineinragen.

Sofern ein Vorratsbehälter vorgesehen ist, der sich bis auf den Boden absenken kann, sind das Führungsrohr und das drehbare und verschiebbare Rohr der Förderleitung so lange ausgebildet, dass sie selbst bei vollständig abgesenktem Behälter nicht durch diesen abgedeckt und in ihrer Bewegung behindert werden.

Nach einer weiteren vorteilhaften Ausgestaltung der Erfindung sind an dem Rohr Öffnungen zum Ansaugen der Umgebungsluft vorgesehen. Dabei kann es sich um eine, zwei, drei oder mehr Öffnungen handeln. Diese können beispielsweise als kreisrunde Löcher ausgebildet sein. Eine Schließeinrichtung sorgt für das teilweise oder vollständige Verschließen der Öffnungen. Hierzu kann beispielsweise eine über Schellen an dem Rohr befestigte Manschette vorgesehen sein. Darüber hinaus besteht die Möglichkeit, die aus einem Kunststoffschlauch bestehende Förderleitung ganz oder teilweise über die Öffnungen zu ziehen. Je mehr Öffnungen geöffnet werden, umso schwächer wird der Luftstrom in dem Rohr und umso weniger Holzpellets werden pro Zeiteinheit angesaugt.

Als Vorteil erweist sich, dass der Topf eine geringe Bauhöhe aufweisen kann. Diese muss nur geringfügig größer als der Durchmesser des Rohrs oder des Führungsrohrs sein. Damit ist der Topf um mindestens 50% niederer als die Töpfe der aus dem Stand der Technik bekannten Vorrichtungen. Die Differenz kann für größere Vorratsbehälter genutzt werden. Dies ist insbesondere bei niederen Kellerräumen, in welchen die Vorratsbehälter in der Regel stehen, von Bedeutung. Die Steigerung der Höhe eines Vorratsbehälters um ca. 20 cm sorgt für eine Vergrößerung des Volumens um ca. 20 bis 30%. Um das Volumen des Topfes nicht zu sehr zu reduzieren, kann der Topf einen größeren Durchmesser aufweisen als bei aus dem Stand der Technik bekannten Vorrichtungen.

Nach einer weiteren vorteilhaften Ausgestaltung der Erfindung ist zwischen dem Vorratsbehälter und dem Topf ein Schieber oder eine Klappe vorgesehen. Durch das Schließen des Schiebers oder der Klappe wird der Vorratsbehälter vom Topf getrennt. Der Topf kann dann von dem Vorratsbehälter abgenommen werden. Damit kann der Topf gereinigt oder ausgetauscht werden, selbst wenn der Vorratsbehälter gefüllt ist.

Nach einer weiteren vorteilhaften Ausgestaltung der Erfindung kann in dem Vorratsbehälter oberhalb des Topfes eine verschließbare Öffnung für das Rohr vorgesehen sein. Ist der Topf verstopft und lässt sich die Verstopfung nicht durch das Drehen des Rohrs lösen, so kann das Rohr aus dem Topf entnommen werden und in die Öffnung im Vorratsbehälter eingeführt werden. Eine Entnahme der Holzpellets aus dem Vorratsbehälter ist damit auch bei einer nicht lösbaren Verstopfung des Topfes möglich. Sobald der Vorratsbehälter geleert ist, kann der Topf vom Vorratsbehälter abgenommen und die Verstopfung entfernt werden.

Der Topf, das Rohr und das Führungsrohr können beispielsweise aus Metall oder Kunststoff ausgebildet sein.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel der Erfindung dargestellt und im Folgenden näher beschrieben. Es zeigen:
- Figur 1: Vorrichtung zum Fördern von Holzpellets in einer Seitenansicht, teilweise geschnitten,
- Figur 2: Vorrichtung zum Fördern von Holzpellets gemäß Figur 1 in einer Ansicht von oben,
- Figur 3: Vorrichtung zum Fördern von Holzpellets mit Öffnungen zum Ansaugen von Umgebungsluft in einer Ansicht von oben.

### Beschreibung des Ausführungsbeispiels

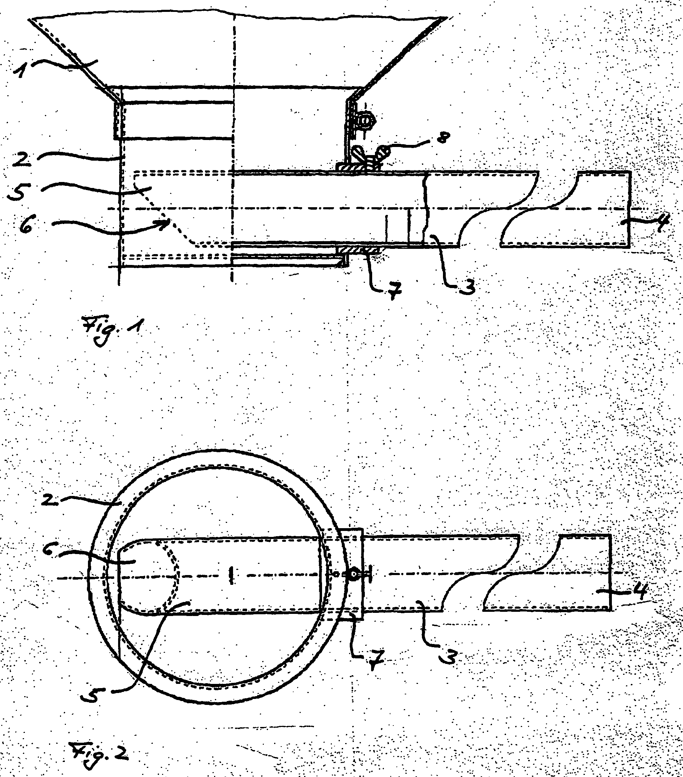

In Figur 1 ist eine Vorrichtung zum Fördern von Holzpellets mit einem Vorratsbehälter 1, einem Topf 2 und einem Rohr 3 dargestellt. Das Ende 4 des Rohrs 3 ist mit einer in der Zeichnung nicht dargestellten Heizung verbunden. Das in den Topf 2 mündende Ende 5 des Rohres ist abgeschrägt und weist eine Öffnung 6 auf. Die Öffnung erstreckt sich über den gesamten Durchmesser des Rohres. Das Rohr 3 wird über ein Führungsrohr 7 in den Topf eingeführt. Zwischen dem Rohr 3 und dem Führungsrohr 7 besteht gerade soviel Abstand, dass das Rohr in dem Führungsrohr gedreht und axial verschoben werden kann. Die gewünschte Einstellung des Rohres kann anhand der Flügelschraube 8 fixiert werden. In Figur 1 ist das Rohr 3 so zum Topf 2 ausgerichtet, dass die Öffnung 6 nach unten weist und sich das Rohr über nahezu dem gesamten Durchmesser des Topfes erstreckt. In dieser Einstellung können nur relativ wenige Holzpellets in das Rohr gelangen.

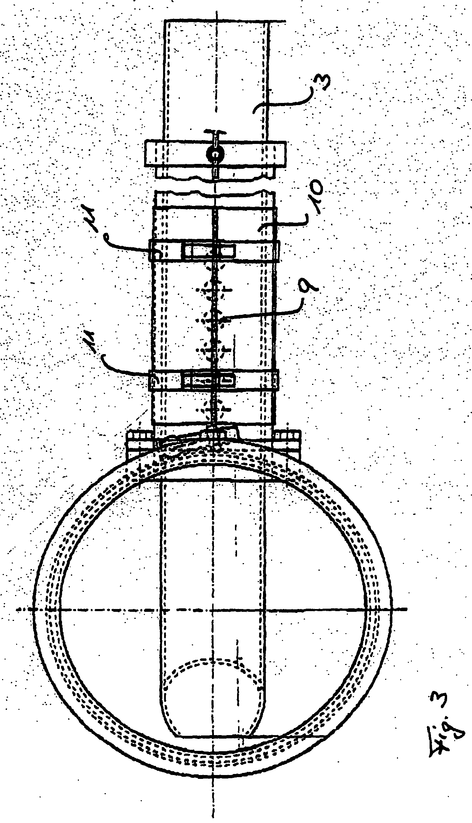

Figur 2 zeigt die Vorrichtung zum Fördern gemäß Figur 1 in einer Ansicht von oben. Im Unterschied zu Figur 1 weist in dieser Darstellung die Öffnung 6 nach oben. In dieser Einstellung können wesentlich mehr Holzpellets pro Zeiteinheit durch das Rohr 3 angesaugt werden. Diese Zahl kann weiter erhöht werden, indem das Rohr so weit aus dem Topf herausgezogen wird, dass sich die Öffnung 6 ungefähr in der Mitte des Topfes befindet. Über das Führungsrohr und die Flügelschraube kann jede beliebige Einstellung der Öffnung 6 relativ zum Topf 2 gewählt und eingestellt werden.

In Figur 3 ist eine Vorrichtung zum Fördern von Holzpellets dargestellt, die im wesentlichen mit der Vorrichtung gemäß Figur 1 übereinstimmt. An dem Rohr 3 sind Öffnungen 9 zum Ansaugen der Umgebungsluft vorgesehen. Diese können mit einer Maschette 10 ganz oder teilweise abgedeckt werden. Die Manschette 10 ist über Rohrschellen 11 an dem Rohr befestigt.

Sämtliche Merkmale der Erfindung können sowohl einzeln als auch in beliebiger Kombination miteinander erfindungswesentlich sein.

### Bezugszeichen

- 1: Vorratsbehälter
- 2: Topf
- 3: Rohr
- 4: Ende des Rohrs
- 5: Ende des Rohrs, welches in den Topf ragt
- 6: Öffnung
- 7: Führungsrohr
- 8: Flügelschraube
- 9: Öffnungen zum Ansaugen der Umgebungsluft
- 10: Manschette
- 11: Rohrschelle

## Patentansprüche

1. Vorrichtung zum Fördern von Holzpellets aus einem Vorratsbehälter in eine Heizung
mit einem Topf (2), in welchen die Holzpellets aufgrund ihrer Gewichtskraft aus dem Vorratsbehälter (1) fallen und
mit einem Förderleitung für die Holzpellets, welche den Topf (2) direkt oder indirekt mit der Heizung verbindet, wobei
das in den Topf mündende Ende (5) der Förderleitung als Rohr (3) ausgebildet ist,
das Ende des Rohrs abgeschrägt ist und eine Öffnung aufweist, die sich über den gesamten Durchmesser des Rohrs erstreckt, und
das in den Topf (2) mündende Ende (5) des Rohrs (3) in dem Topf (2) drehbar und verschiebbar gelagert ist,
**dadurch gekennzeichnet,**
**dass** ein elektrisch angetriebenes Gebläse vorgesehen ist, zum Erzeugen eines starken Luftstroms in der Förderleitung und zum Ansaugen der Holzpellets aus dem Topf (2) und Ablagern an die Heizung,
**dass** an dem Rohr Öffnungen (9) zum Ansaugen der Umgebungsluft vorgesehen sind, und dass eine Schließeinrichtung (10, 11) zum Öffnen und Schließen der Öffnungen (9) vorgesehen sind.

2. Vorrichtung nach Anspruch 1, **dadurch gekennzeichnet, dass** ein Griff zum manuellen Drehen und Verschieben des in den Topf (2) hineinragenden Endes (5) des Rohrs (3) vorgesehen ist.

3. Vorrichtung nach Anspruch 1, **dadurch gekennzeichnet, dass** ein Antrieb zum Drehen und Verschieben des in den Topf (2) hineinragenden Endes (5) des Rohrs (3) vorgesehen ist.

4. Vorrichtung nach Anspruch 2, 3oder 4, **dadurch gekennzeichnet, dass** als Führung für das drehbare und verschiebbare Ende (5) des Rohrs (3) ein das Rohr (3) an der Außenseite umgebendes Führungsrohr (7) vorgesehen ist, dass das Führungsrohr (7) von außen in den Topf (2) mündet.

5. Vorrichtung nach Anspruch 1, **dadurch gekennzeichnet, dass** eine das Rohr umgebende Manschette (10) zum Öffnen und Schließen der Öffnungen (9) vorgesehen ist.

6. Vorrichtung nach einem der vorhergehenden Ansprüche, **dadurch gekennzeichnet, dass** das Rohr (3) seitlich in den Topf (2) hineinragt.

7. Vorrichtung nach einem der vorhergehenden Ansprüche, **dadurch gekennzeichnet, dass** der Topf (2) eine Höhe aufweist, die ungefähr dem Durchmesser des Rohrs (3) entspricht.

8. Vorrichtung nach einem der vorhergehenden Ansprüche, **dadurch gekennzeichnet, dass** zwischen dem Vorratsbehälter und dem Topf ein Schieber oder eine Klappe vorgesehen ist.

9. Vorrichtung nach einem der vorhergehenden Ansprüche, **dadurch gekennzeichnet, dass** in dem Vorratsbehälter eine verschließbare Öffnung zum Einführen des Rohrs vorgesehen ist.

## Claims

1. Apparatus for transporting wood pellets from a container to a heating installation,
having a pot (2) into which the wood pellets fall under their own weight from the container (1) and
having a conveyor for the wood pellets that connects the pot (2) directly or indirectly with the heating installation, whereby
the end (5) of the conveyor that opens into the pot is configured as a pipe (3),
the end of the pipe is bevelled and has an opening extending across the entire diameter of the pipe, and
the end (5) of the pipe (3) that opens into the pot (2) is pivoted and movable in the pot (2),
**characterised in that**
an electrically driven blower is provided to generate a strong current of air in the conveyor and to suck the wood pellets from the pot (2) and deposit them in the heating installation,
openings (9) are provided in the pipe for the intake of ambient air and closing devices (10, 11) are provided for opening and closing the openings (9).

2. Apparatus according to claim 1, **characterised in that** a handle is provided for manually turning and displacing that end (5) of the pipe (3) that projects into the pot (2).

3. Apparatus according to claim 1, **characterised in that** a drive is provided for turning and displacing that end (5) of the pipe (3) that projects into the pot (2).

4. Apparatus according to claims 2, 3, or 4, **characterised in that** a guide pipe (7) enclosing the pipe (3) on the outside is provided for guiding the pivoting and movable end (5) of the pipe (3) in such a way that the guide pipe (7) opens into the pot (2) from the outside.

5. Apparatus according to claim 1, **characterised in that** a sleeve (10) enclosing the pipe is provided for opening and closing the openings (9).

6. Apparatus according to one of the previous claims, **characterised in that** the pipe (3) projects laterally into the pot (2).

7. Apparatus according to one of the previous claims, **characterised in that** the pot (2) has a height that corresponds approximately to the diameter of the pipe (3).

8. Apparatus according to one of the previous claims, **characterised in that** a slide valve or flap is provided between the container and the pot.

9. Apparatus according to one of the previous claims, **characterised in that** a closable opening is provided in the container for introducing the pipe.

## Revendications

1. Dispositif pour transporter des granules compressés de bois vers un appareil de chauffage
avec une chambre (2) dans laquelle les granules compressés de bois tombent du réservoir de stockage (1) sous l'effet de leur propre poids et
avec une conduite d'alimentation pour les granules compressés de bois qui relie directement ou indirectement la chambre (2) au chauffage, où
l'extrémité (5) de la conduite d'alimentation débouchant dans la chambre est un tube (3),
l'extrémité du tube est coupée en biseau et présente une ouverture qui correspond au diamètre total du tube, et
l'extrémité (5) du tube (3) débouchant dans la chambre (2) peut pivoter et glisser dans la chambre (2),
**caractérisé par le fait**
**qu'**une soufflante à commande électrique est prévue pour engendrer un puissant courant d'air dans la conduite d'alimentation et pour aspirer les granules compressés de bois en dehors de la chambre (2) et les déposer dans le chauffage,
**que** le tube est doté d'ouvertures (9) destinées à aspirer l'air environnant et qu'un dispositif de fermeture (10, 11) est prévu pour ouvrir et fermer ces ouvertures (9).

2. Dispositif selon la revendication 1 **caractérisé par le fait qu'**une poignée est prévue pour faire tourner et coulisser à la main l'extrémité (5) du tube (3) pénétrant à l'intérieur de la chambre (2).

3. Dispositif selon la revendication 1 **caractérisé par le fait qu'**un entraînement est prévu pour faire tourner et coulisser à la main l'extrémité (5) du tube (3) pénétrant à l'intérieur de la chambre (2).

4. Dispositif selon les revendications 2, 3 ou 4 **caractérisé par le fait que**, comme guidage pour l'extrémité (5) pivotante et coulissante du tube (3), est prévu un tube conducteur (7) entourant le tube (3) par l'extérieur et selon lequel le tube conducteur (7) débouche, de l'extérieur, dans la chambre (2).

5. Dispositif selon la revendication 1 **caractérisé par le fait qu'**une manchette (10) entourant le tube est prévue pour ouvrir et fermer les ouvertures (9).

6. Dispositif selon l'une des revendications précédentes, **caractérisé par le fait que** le tube (3) débouche latéralement dans la chambre (2).

7. Dispositif selon l'une des revendications précédentes, **caractérisé par le fait que** la chambre (2) présente une élévation qui correspond sensiblement au diamètre du tube (3).

8. Dispositif selon l'une des revendications précédentes, **caractérisé par le fait qu'**un coulisseau ou un clapet est prévu entre le réservoir de stockage et la chambre.

9. Dispositif selon l'une des revendications précédentes, **caractérisé par le fait que** le réservoir de stockage est doté d'une ouverture avec un obturateur pour l'introduction du tube.
